# EUROPEAN PATENT APPLICATION

(11) **EP 2 988 457 A1**
(43) Date of publication of application: **24.02.2016**
(21) Application number: 13882543.5
(22) Date of filing: 19.04.2013
(51) Int. Cl.: H04L 12/46

(54) **GATEWAY DEVICE, NETWORK SYSTEM INCLUDING GATEWAY DEVICE, AIR-CONDITIONING OUTDOOR UNIT, AND AIR-CONDITIONING NETWORK SYSTEM**

(71) Applicant: Mitsubishi Electric Corporation, Tokyo 100-8310 (JP)
(72) Inventor: HAMADA, Kazuki, Tokyo 100-8310 (JP); KITAICHI, Ryuichi, Tokyo 100-8310 (JP)
(74) Representative: Pfenning, Meinig & Partner mbB
(86) International application number: PCT/JP2013/002664
(87) International publication number: WO 2014/170930

(57) **Abstract**

A gateway device includes an address management means 5 that manages address information for enabling transmission via a second interface of the own gateway device and of another gateway device, a first relay processing part 3 that, if the data received by the second interface is multicast data, adds to the multicast data received, address information and a header conforming to a protocol of the non-band-sharing network, and outputs the multicast data to a first interface, and a second relay processing part 4 that, if the data received by the first interface includes address information, extracts only multicast data from data conforming to the protocol of the non-band-sharing network, and transmits the multicast data to the second interface. Therefore, even when the collision domain for N (N is a natural number of 2 or more) of facility networks having different address architectures is to be divided using (N+1) or more of gateways, multicast communication that match the area of the address architecture can be realized.

## Description

### Technical Field

The present invention relates to a facility network that uses a gateway device.

### Background Art

In the field of so-called facility network, a network that uses band-sharing communication media has conventionally been employed. The band-sharing communication media generally have a very narrow band but are in use continuously even today in various types of facility instruments for different reasons regarding, for example, cost performance, operation performance, and connection with existing instruments.

On the other hand, due to an improvement in function of the facility instrument, the communication quantity required by devices increases, posing a problem of the insufficient communication band.

In a conventional facility network system, when the communication collision domain is shared by all facility instruments, the collision domain is divided into a plurality of sub-domains, so that the communication band is used efficiently (for example, Patent Literature 1).

Conventionally, a plurality of facility instruments are connected to a facility instrument having a plurality of communication ports, and the latter facility instrument selects channels appropriately based on destination addresses, thereby dividing the collision domain.

### Citation List

### Patent Literature

Patent Literature 1: Japanese Patent No. 3995469

### Summary of Invention

### Technical Problem

In the conventional facility network system, the facility instrument divides the collision domain. Thus, if the facility instrument is not equipped with a plurality of communication ports and a collision domain dividing function, the collision domain is not divided, and the communication band cannot be used efficiently.

In the facility network system, assume that the collision domain is to be divided by gateway devices. If the gateway devices are connected using a communication channel having a broader band while the communication bands of the respective divisional collision domains are suppressed, a sufficient band may be reserved. When, however, the collision domain is divided for N (N is a natural number of 2 or more) of facility networks having different address architectures using (N+1) number or more of gateway devices, the extent that the broadcast communication and multicast communication can reach changes. Then, necessary packets cannot reach all devices that need to receive the communication.

The present invention has been made in view of the above situations, and has as its object to realize broadcast or multicast communication that matches the areas of the address architectures when a collision domain for N (N is a natural number of 2 or more) of facility networks having different address architectures is to be divided using (N+1) number or more of gateway devices.

### Solution to Problem

In order to solve the problems described above and to achieve the above object, a gateway device according to the present invention includes: a first interface, connected to a non-band-sharing network, for transmitting and receiving data; a second interface, connected to a band-sharing network, for transmitting and receiving data; address management means that manages multicast address information for enabling transmission of multicast data via the second interface of the gateway device and of another gateway device; a first relay processing part that, if the data received by the second interface is the multicast data, adds to the multicast data received, the multicast address information and a header conforming to a protocol of the non-band-sharing network, and outputs the multicast data to the first interface; and a second relay processing part that, if the data received by the first interface includes the multicast address information, extracts only the multicast data from data conforming to the protocol of the non-band-sharing network, and transmits the multicast data to the second interface.

### Advantageous Effects of Invention

A gateway device according to the present invention has the configuration described above, so that it can realize broadcast or multicast communication that matches the areas of the address architectures even when a collision domain for N (N is a natural number of 2 or more) of facility networks having different address architectures is to be divided using (N+1) number or more of gateway devices.

### Brief Description of Drawings

Fig. 1 is a diagram illustrating a gateway device 100 in a facility network according to Embodiment 1.
Fig. 2 represents an example of a network configuration including the gateway device 100 according to Embodiment 1.
Fig. 3 is a flowchart indicating an operation that takes place when a communication device 211 transmits multicast data in Fig. 2.
Fig. 4 is a diagram illustrating a gateway device 100 in a facility network according to Embodiment 1.
Fig. 5 is a flowchart indicating an operation that takes place when a communication device 211 transmits data in Embodiment 2.
Fig. 6 is a configuration diagram of a gateway device 100 according to Embodiment 3.
Fig. 7 is a flowchart indicating a process in Embodiment 3 up to a point where a bridge 100 starts non-frame relay with a master station 101.
Fig. 8 is a configuration diagram of a gateway device 100 according to Embodiment 4 which is realized based on Embodiment 1.

### Description of Embodiments

Embodiments of a bridge according to the present invention and a network system that uses the bridge will be described in detail below with reference to the accompanying drawings. Note that the present invention will not be limited by these embodiments.

### Embodiment 1.

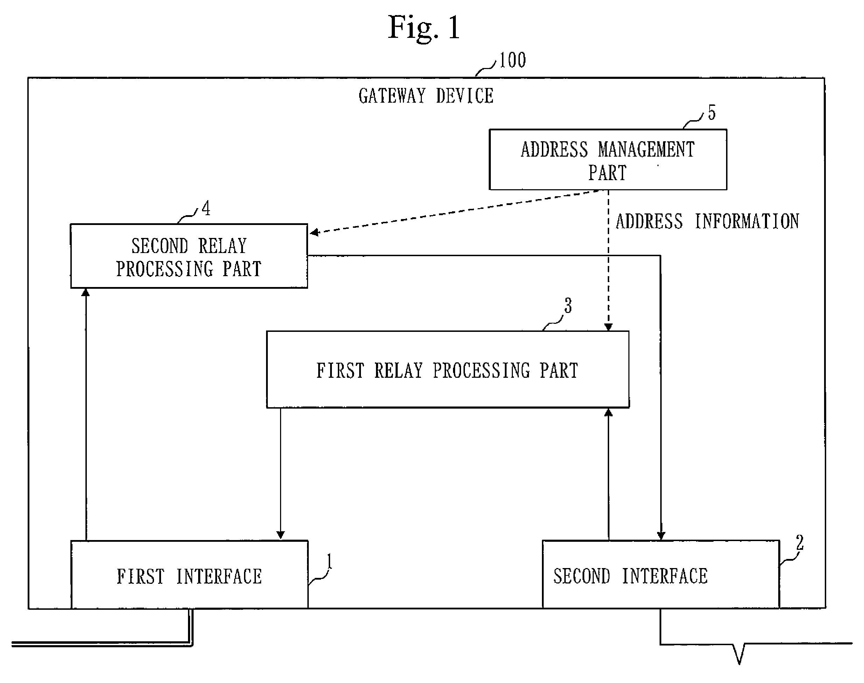

Fig. 1 is a diagram illustrating a gateway device in a facility network according to Embodiment 1.

The configuration will be described.

A gateway device 100 is constituted by a first interface 1, a second interface 2, a first relay processing part 3, a second relay processing part 4, and an address management part 5.

The first interface 1 is an interface to be connected to a non-band-sharing broader-band network between two types networks to be connected to the gateway device 100. For an example, an interface employing Ethernet (registered trademark) is used.

The second interface 2 is an interface to be connected to a band-sharing narrower-band network between the two types of networks to be connected to the gateway device 100. The present invention, while not limiting a practical network type, is particularly of greater utility in a case of half-duplex communication or in a case where a low-speed network is connected.

The first relay processing part 3 has the following functions. The first relay processing part 3 checks data received from the second interface 2 in terms of whether or not the destination address of the received data is either a multicast address or broadcast address in the address architecture of the second interface 2. If the destination address is either the multicast address or broadcast address, the first relay processing part 3 encapsulates the received data using address information acquired from the address management part 5, and sends out the encapsulated data via the first interface.

The second relay processing part 4 has the following functions. The second relay processing part 4 checks data received from the first interface 1 in terms of whether or not the destination address of the received data is a multicast address and coincides with the address information acquired from the address management part 5. If the checking result indicates coincidence, the second relay processing part 4 decapsulates a received packet, and sends out the processed data via the second interface 2. If the data received from the first interface 1 has a multicast address that does not coincide with the address information acquired from the address management part 5, the second relay processing part 4 discards the received data.

According to this embodiment, if the destination address of the data received from the first interface 1 is either a broadcast address or unicast address, the operation in this case is performed arbitrarily and is not limited in this embodiment. More specifically, in this case, the operation may follow the communication protocol employed in the broadband network to which the first interface 1 is connected, or the received data may be processed in accordance with arbitrarily determined rules. The broadcast data or unicast data will not be sent from the first relay processing part of this embodiment. However, as the first interface is connected to the broadband network, there is a possibility that communication of another system not related to the present invention may be received by the gateway device due to superposing or the like.

The address management part 5 has a function of holding and managing the address information to be used by the gateway device 100. The address information is information that is used in determination of whether or not another gateway device to which the address management part 5 does not belong performs decapsulation, and in determination of whether or not the gateway device to which the address management part 5 belongs performs decapsulation of a multicast packet received from another gateway device. These determinations are applied to multicast. An address to be held by the address management part 5 is always a multicast address.

The address information to be held by the address management part 5 may be supplied to the address management part 5 by a direct input means that uses a user interface, or may be generated automatically from identification information such as a gateway identifier by the gateway device 100 in accordance with a predetermined rule.

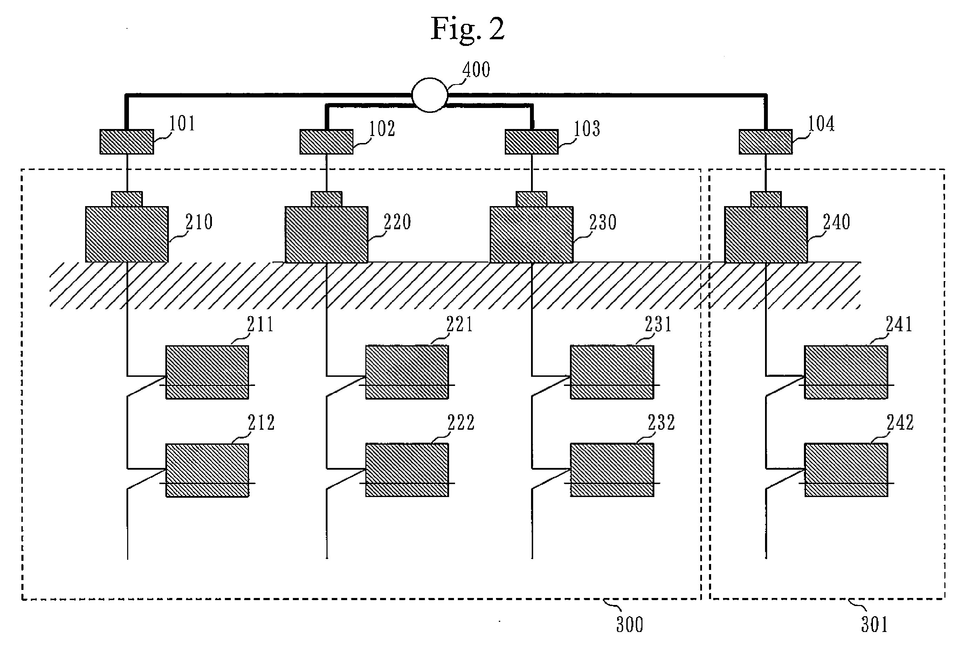

Fig. 2 represents an example of a network configuration including the gateway device 100 according to Embodiment 1. This example is applied to a system having a configuration in which two or more band-sharing networks (narrow-band networks) having different address architectures and a non-band-sharing network (broadband network) are connected via gateway devices 100 that implement this embodiment.

Referring to Fig. 2, gateway devices 101 to 104 are connected to the non-band-sharing network (broadband network), and are connected to each other via a network hub 400 so as to be able to communicate with each other.

The gateway devices 101 to 104 are also connected to band-sharing networks (narrow-band networks), respectively.

In the band-sharing networks (narrow-band networks) connected to the gateway devices 101 to 104, communication devices 210 to 212, 220 to 222, 230 to 232, and 240 to 242 each having a band-sharing interface are connected on a line.

The communication devices 210 to 212, 220 to 222, and 230 to 232 connected to the gateway devices 101 to 103, respectively, constitute a band-sharing network having a first address architecture 300. The communication devices 240 to 242 connected to the gateway device 104 constitute a band-sharing network having a second address architecture 301.

The communication devices 210 to 212, 220 to 222, 230 to 232, and 240 to 242 have address information that is unique to the first address architecture 300 and the second address architecture 301 they belong to.

The operation will be described.

Referring to Fig. 2, a case will be described where, for example, the communication device 211 transmits multicast data.

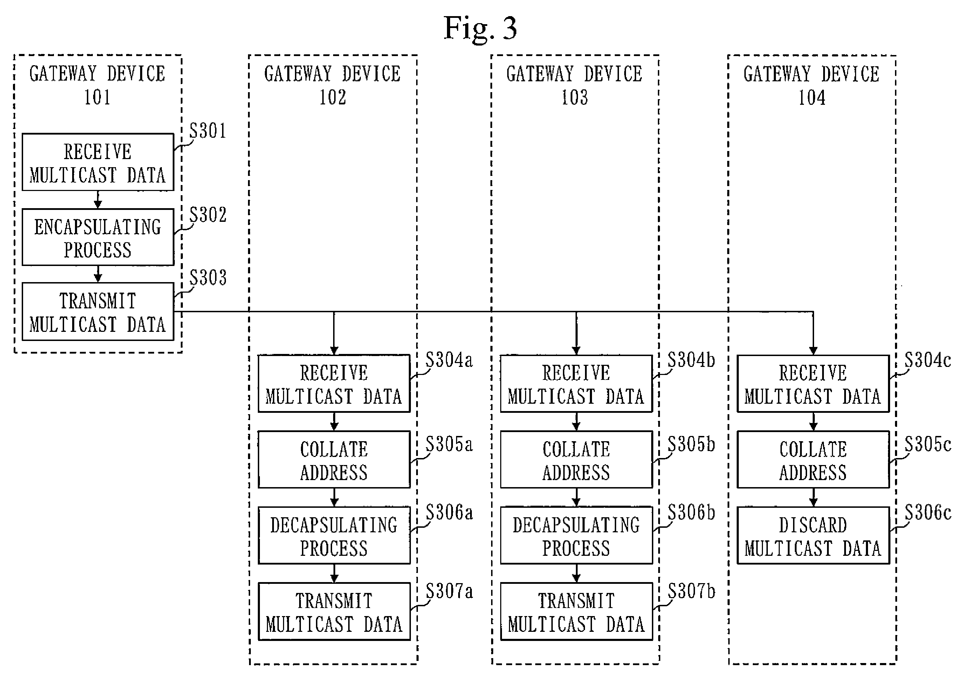

Fig. 3 is a flowchart indicating an operation that takes place when the communication device 211 transmits the multicast data in Fig. 2.

Referring to Fig. 2, the multicast data is distributed from the communication device 211 via the band-sharing network and reaches the communication device 212 and the communication device 210. At the same time, in step S301 of Fig. 3, the gateway device 101 receives this multicast data. More specifically, the second interface in Fig. 1 receives the multicast data.

In step S302 of Fig. 3, the first relay processing part 3 of the gateway device 101 encapsulates the multicast data.

More specifically, in Fig. 1, when the first relay processing part 3 receives the multicast data from the second interface, the first relay processing part 3 checks whether or not the destination address is a multicast address. If the destination address is a multicast address, the first relay processing part 3 encapsulates the received multicast data (encloses a packet in the protocol of the band-sharing network (narrow-band network) into the real data portion of a packet in the protocol of the non-band-sharing network (broadband network)) using the address information managed by the address management part 5.

In this encapsulation, the address information managed by the address management part 5 is embedded in a destination address region in the header portion of the communication protocol employed in the non-band-sharing network (broadband network), and is used for the relay process in the broadband network as well as for determination as to whether the other gateway devices 102 to 104 decapsulate the data (extract the packet in the protocol of the band-sharing network (narrow-band network) out of the packet in the protocol of the non-band-sharing network (broadband network)), or whether the other gateway devices 102 to 104 discard the data.

Where communication in the non-sharing medium network is performed using an IP protocol, no address information other than the address information corresponding to the designated multicast address is received in Socket which is a general implementation of the IP protocol, according to the default setting. Therefore, when a network using an IP protocol is employed, an implementation that receives/processes only the address information corresponding to the designated multicast address can be easily realized by setting, in Socket, address information corresponding to the multicast address which is designated as a packet to be received.

The address information employed in the step of step S302 signifies decapsulation in the gateway devices 102 and 103 and non decapsulation in the gateway device 104, in Fig. 2.

There is no fixed method for determining the address information corresponding to the multicast address except that gate devices belonging to the same group use the same multicast address.

A method of defining a group ID that identifies a group and generating address information from the ID automatically based on a predetermined rule may be considered suitable for this embodiment, because gateways belonging to the same group will use the same address. Alternatively, the address information may be determined by another method such as preparing an interface for setting and designating immediate data.

In step S303 of Fig. 3, the gateway device 101 outputs the encapsulated multicast data to the non-band-sharing network (broadband network). In Fig. 1, the first interface receives the multicast data encapsulated by the first relay processing part 3, and the first interface outputs the multicast data to the non-band-sharing network.

In steps S304a, S304b, and S304c of Fig. 3, the gateway devices 102 to 104 receive the multicast data transmitted from the gateway device 101. More specifically, the first interfaces of the gateway devices 102 to 104 of Fig. 1 receive the encapsulated and transmitted multicast data.

In steps S305a and S305b of Fig. 3, the second second relay processing part 4 of each of the gateway devices 102 and 103 of Fig. 1 receives the encapsulated multicast data from the corresponding first interface 1, and checks whether or not the received encapsulated multicast data concerns the address information corresponding to the multicast address managed by the address management part 5 of its own gateway device. In each of the gateway devices 102 and 103, the multicast data is determined to concern the address information managed by the address management part 5 and corresponding to the multicast address belonging to the first address architecture 300 which is in the same group as the gateway device 101 is.

Meanwhile, in step S305c of Fig. 3, the second relay processing part 4 of the gateway device 104 of Fig. 1 receives the encapsulated multicast data from the corresponding first interface 1, and checks whether or not the received multicast data concerns the address information corresponding to the multicast address managed by the address management part 5 of its own gateway device. As a result of the checking, it is determined that the multicast data does not concern the address information.

In S306a and S306b of Fig. 3, the second relay processing part 4 of each of the gateway devices 102 and 103 of Fig. 1 decapsulates the encapsulated multicast data (extracts the packet in the protocol of the band-sharing network (narrow-band network) out of the packet in the protocol of the non-band-sharing network (broadband network)).

Meanwhile, in step S306c of Fig. 3, the second relay processing part 4 of the gateway device 104 of Fig. 1 checks whether or not the received multicast data concerns the address information corresponding to the multicast address managed by the address management part 5 of its own gateway device. As a result of the checking, the second relay processing part 4 determines that the multicast data does not concern the address information, and discards the received multicast data.

In steps S307a and S307b of Fig. 3, the second interfaces 2 of the gateway devices 102 and 103 of Fig. 1 receive the decapsulated multicast data from the corresponding first relay processing parts 3, output the received multicast data to the band-sharing networks (narrow-band networks) and transfer the multicast data to the communication devices 220 to 222, and 230 to 232 which are connected to the sharing medium networks subordinate to the gateway devices 102 and 103.

In Fig. 3, a case has been described where the multicast data is transmitted from the communication device 211 connected to the gateway device 101. If the multicast data is received from the communication device connected to the gateway device 102 or 103, the multicast data can be received from the communication devices connected to the gateway devices 101 to 103.

Hence, each of the gateway devices 100 to 104 includes the first interface 1, connected to the non-band-sharing network, for transmitting and receiving data; the second interface 2, connected to the band-sharing network, for transmitting and receiving data; the address management means 5 that manages address information for enabling transmission of data via the second interface of the gateway device and of another gateway device; the first relay processing part 3 that, if the data received by the second interface is the multicast data, adds to the multicast data received, the address information and a header conforming to the protocol of the non-band-sharing network, and outputs the multicast data to the first interface; and the second relay processing part 4 that, if the data received by the first interface includes address information, extracts only the multicast data from data conforming to the protocol of the non-band-sharing network, and transmits the multicast data to the second interface. Therefore, broadcast or multicast communication that matches the area of the address architecture can be realized even when the collision domain for N (N is a natural number of 2 or more) of facility networks having different address architectures is to be divided using (N+1) number or more of gateways.

Embodiment 2.

Embodiment 2 will describe a configuration which is provided with the entire configuration and operation of Embodiment 1 and which additionally includes an address storage processing part 6.

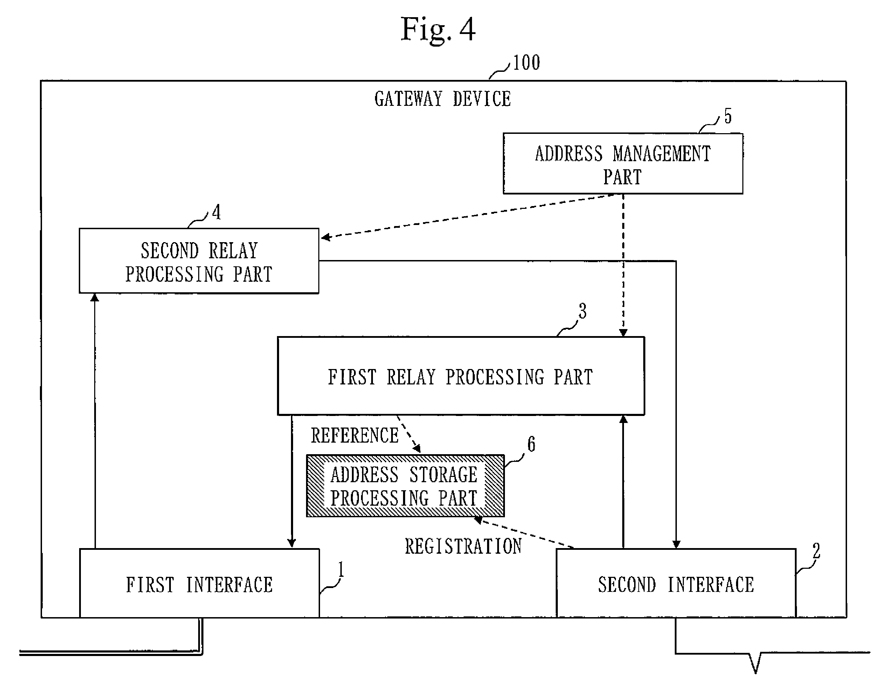

Fig. 4 is a diagram illustrating a gateway device 100 in a facility network according to Embodiment 2.

An address storage processing part 6 of the gateway device 100 has the following functions. The address storage processing part 6 monitors data received from a second interface 2 and acquires a sender address included in the data, thereby holding address information on a communication device connected to the second interface 2. The address storage processing part 6 also provides the address information it saves in response to a request from a first relay processing part 3.

The first relay processing part 3 processes multicast or broadcast data received by the second interface 2, in the same manner as in Embodiment 1, and processes unicast data in the following manner.

The first relay processing part 3 extracts a destination address from the received unicast data and makes an address information query to the address storage processing part 6 about the destination address. As the result of the query, if the destination address is registered, the first relay processing part 3 discards the unicast data; if the destination address is not registered, the first relay processing part 3 handles the unicast data in the same manner as with the multicast data or broadcast data.

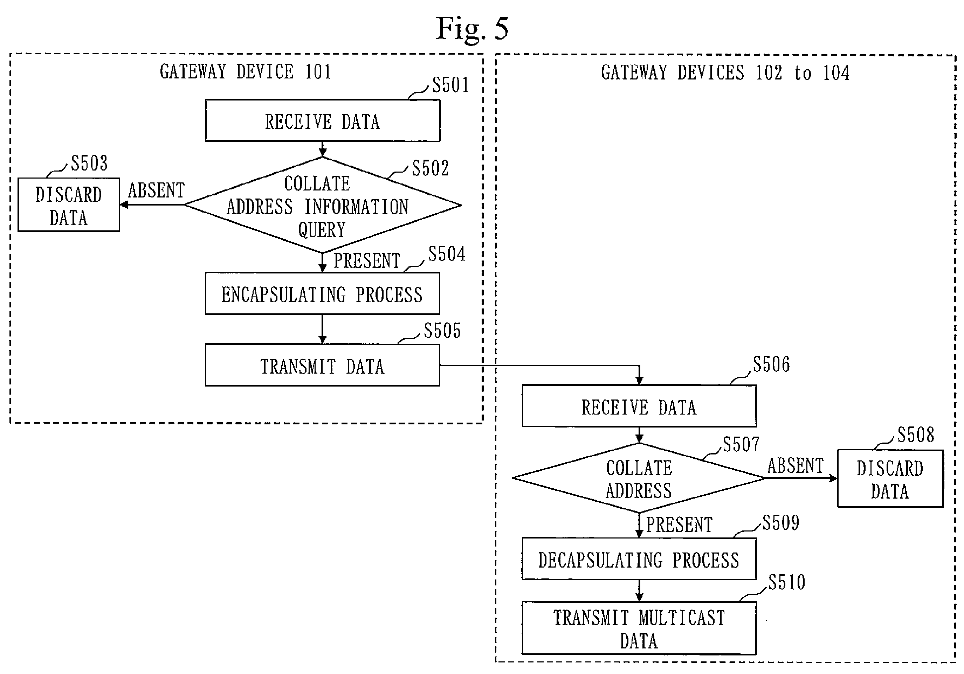

The operation will now be described. Fig. 5 is a flowchart indicating an operation that takes place when a communication device 211 transmits data in Embodiment 2.

Assume that unicast data addressed to a communication device 210 or 212 each connected to a gateway device 101 is transmitted from the communication device 211 in Fig. 2.

In step S501 of Fig. 5, the gateway device 101 receives the unicast data.

In step S502, an address information query is made based on the destination information of the unicast data. More specifically, in Fig. 4, the first relay processing part 3 extracts the destination address of the unicast data received from the second interface 2 and checks the destination address with the address storage processing part 6. The first relay processing part 3 determines that the unicast data is addressed to a device connected to a sharing medium network that covers the first relay processing part. Then, the flow advances to step S503 of Fig. 5.

In step S503, the first relay processing part 3 discards the unicast data.

Assume that unicast data, or multicast data or broadcast data addressed to any one of the communication devices 220 to 222 connected to a different gateway device 102 is transmitted from the communication device 211 in Fig. 2.

In step S502, an address information query is made based on the destination information of the unicast data. More specifically, in Fig. 4, the first relay processing part 3 extracts the destination address of the unicast data received from the second interface 2 and checks the destination address with the address storage processing part 6. The first relay processing part 3 determines that the unicast data is not addressed to a device connected to the sharing medium network that covers the first relay processing part 3. Then, the flow advances to step S504.

In step S504, the same operation as in step S302 of Fig. 3 is carried out.

The operation of step S506 of Fig. 5 is the same as the operation of S304a, S304b, or S304c of Fig. 3. The operation of S507 is the same as the operation of S305a, S305b, or S305c. The operation of S508 is the same as the operation of S306c. The operation of S509 is the same as the operation of S306a or S306b. The operation of S510 is the same as the operation of S307a or S308b.

Fig. 5 has described a case where the communication device 211 connected to the gateway device 101 transmits data. The same process will be performed if data is received from a communication device connected to the gateway device 102 or a gateway device 103.

Hence, each of the gateway devices 100 to 104 includes: the first interface 1, connected to the non-band-sharing network, for transmitting and receiving data; the second interface 2, connected to the band-sharing network, for transmitting and receiving data; an address management means 5 that manages address information for enabling transmission of data via the second interface of the gateway device and of another gateway device; the first relay processing part 3 that, if the data received by the second interface is multicast data, adds to the multicast data received, address information and a header conforming to the protocol of the non-band-sharing network, and outputs the multicast data to the first interface; and a second relay processing part 4 that, if the data received by the first interface includes address information, extracts only multicast data from data conforming to the protocol of the non-band-sharing network, and transmits the multicast data to the second interface. Each gateway device also includes an address storage processing part 6 that acquires a data sender address received by the second interface 2. If the destination address of the data received is a sender address stored in the address storage processing part 6, the first relay processing part 3 does not output the data to the first interface 1. This lowers the band occupancy rate of the non-band-sharing network. Also, not only multicast or broadcast communication is realized, but also a so-called flooding operation (a scheme of realizing communication in a case where a network to which a device having a destination address is connected is unknown, by transferring the data so as to reach all devices) can be realized.

Embodiment 3.

Embodiment 3 will describe a configuration which is provided with the entire configuration of Embodiment 2 and which additionally includes a gateway address management part 7.

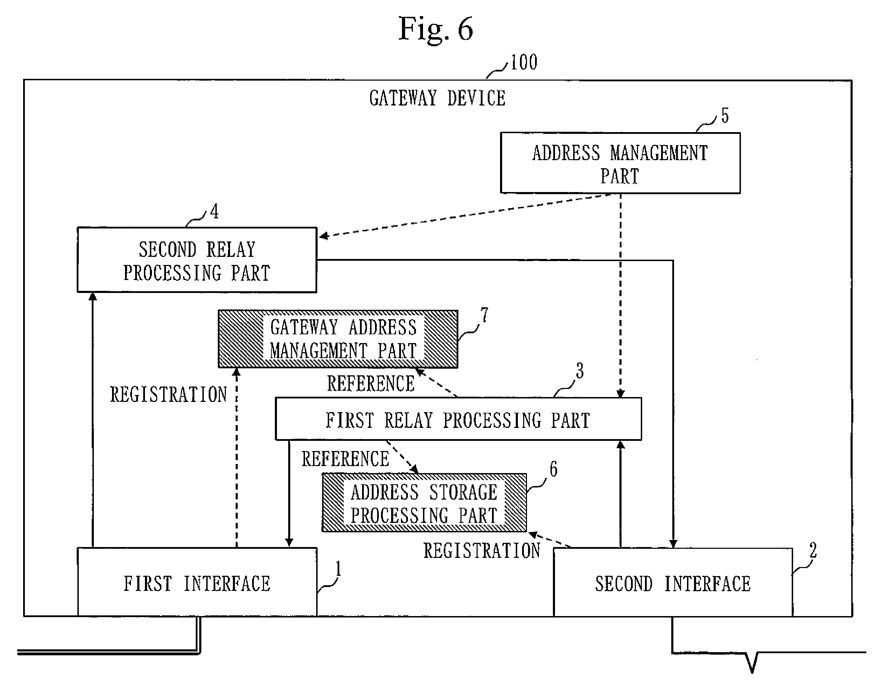

Fig. 6 is a configuration diagram of a gateway device 100 according to Embodiment 3.

The gateway address management part 7 has the following functions. The gateway address management part 7 monitors data received from a first interface 1 and extracts, from the received data, address information (the address of the broadband network) of the sender gateway and address information (the address of the narrow-band network) of the sender communication device which has been included in pre-encapsulation data within the received data. The gateway address management part 7 pairs the two types of address information and stores the pair. The gateway address management part 7 also provides information on the address pair which is to be provided in response to a request from a first relay processing part 3.

The first relay processing part 3 processes multicast data or broadcast data received from a second interface 2, in the same manner as in Embodiment 1 or 2, and processes unicast data in the following manner.

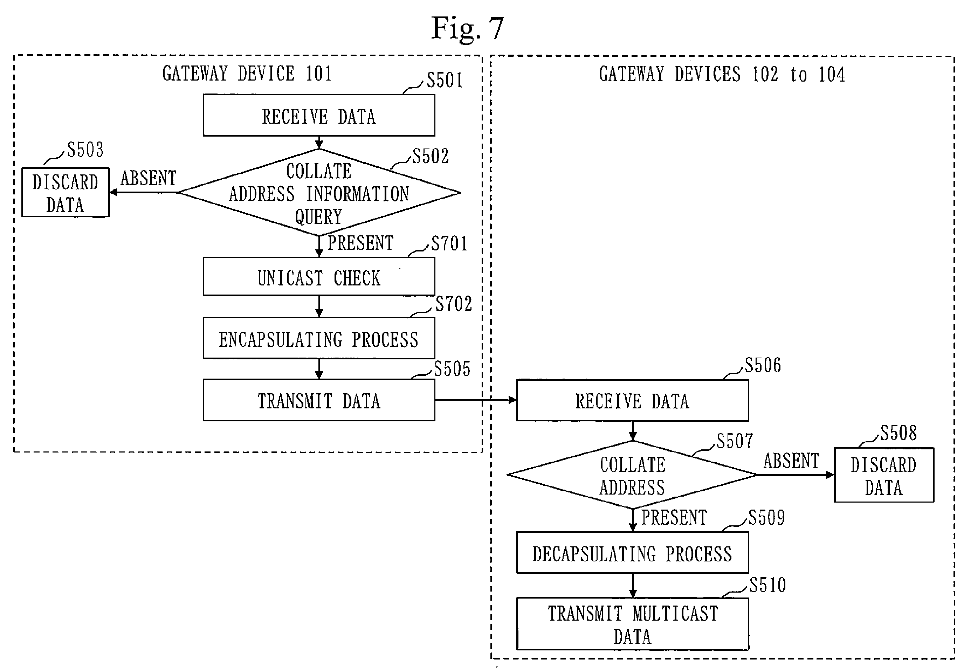

Fig. 7 is a flowchart indicating the operation of a case where data is transmitted from a communication device 211 of Embodiment 3. Embodiment 3 is different from Embodiment 2 in that in place of step S504 of Fig. 5, step S701 and step S702 are inserted in Fig. 7. Explanation will be given only on steps S701 and S702.

In step S501, the first relay processing part 3 extracts a destination address from unicast data received by the second interface 2. In step S502, the first relay processing part 3 makes an address information query to an address storage processing part 6 of the gateway device 100, about the destination address. As the result of the query, if the destination address is registered, the first relay processing part 3 discards the data.

In step S502, if the destination address is not registered, then in step S701, the first relay processing part 3 makes an address information query to the gateway address management part 7 about this destination address. As the result of the query, if the destination address is registered, the first relay processing part 3 determines that the received data is unicast data to a gateway to which the destination address corresponds.

If the received data is determined as unicast data in step S701, then in step S702, the first relay processing part 3 encapsulates the received data by including, as the destination address, the unicast address of the corresponding gateway into the header portion of the protocol of the non-band-sharing network, and outputs the encapsulated data to the first interface 1.

In step S701, if the destination address is not registered, then the same process as for the multicast data or broadcast data in Embodiment 2 is performed.

In step S507, as the result of address collation, if the address is a unicast address of its own device, the same process as in a case where the destination of the multicast data is registered in an address management part 5 (S507, YES) is performed. If the destination address is multicast, the process in Embodiments 1 and 2 applies.

Except for those described above, the processes are the same as in Embodiment 2.

There may be cases where, in addition to the unicast data generated according to this embodiment, there is also unicast data which the first interface 1 is able to receive. For example, another system not specified by the present invention may be connected to a broadband network. In such a case, the unicast data generated according to this embodiment and the unicast data generated according to an embodiment other than this embodiment need be identified separately. As a method for this, for example, the payload portion of the unicast data may be provided with an identification flag. However, the identification method is not limited to this, and a different method may be employed. As the result of the identification, if the received data is unicast data generated according to this embodiment, the process specified by this embodiment is performed. For a case where the received data is unicast data generated by a method other than this embodiment, the present invention will not specify a process.

This embodiment includes: the first interface 1, connected to the non-band-sharing network, for transmitting and receiving data; the second interface 2, connected to the band-sharing network, for transmitting and receiving data; the address management means 5 that manages address information for enabling transmission of data via the second interface of the gateway device and of another gateway device; the first relay processing part 3 that, if the data received by the second interface is multicast data, adds to the multicast data received, address information and a header conforming to the protocol of the non-band-sharing network, and outputs the multicast data to the first interface; and a second relay processing part 4 that, if the data received by the first interface includes address information, extracts only multicast data from data conforming to the protocol of the non-band-sharing network, and transmits the multicast data to the second interface. This embodiment also includes the address storage processing part 6 that acquires a data sender address received by the second interface 2, and the gateway address management part 7 that stores the address information of a gateway device as a sender and the address information of a corresponding communication device of the sender, out of the data received by the first interface 1. If the destination address of the received data is a sender address stored in the address storage processing part 6, the first relay processing part 3 does not output the data to the first interface 1. If the destination address of unicast data received by the second interface 2 has been stored in the gateway address management part 7, the first relay processing part 3 treats a gateway address corresponding to the destination address of the unicast data, as the destination address of the header of the protocol of the non-band-sharing network. This eliminates the need to transfer the unicast data for a destination having an address learning function by the flooding operation. Thus, the problems can be solved by decreasing the band occupancy rate of the non-band-sharing network more than in Embodiment 2.

Embodiment 4.

This embodiment provides a configuration obtained by adding an IGMP (Internet Group Management Protocol) Report transmission processing part 8 to the configuration of any one of Embodiments 1 to 3.

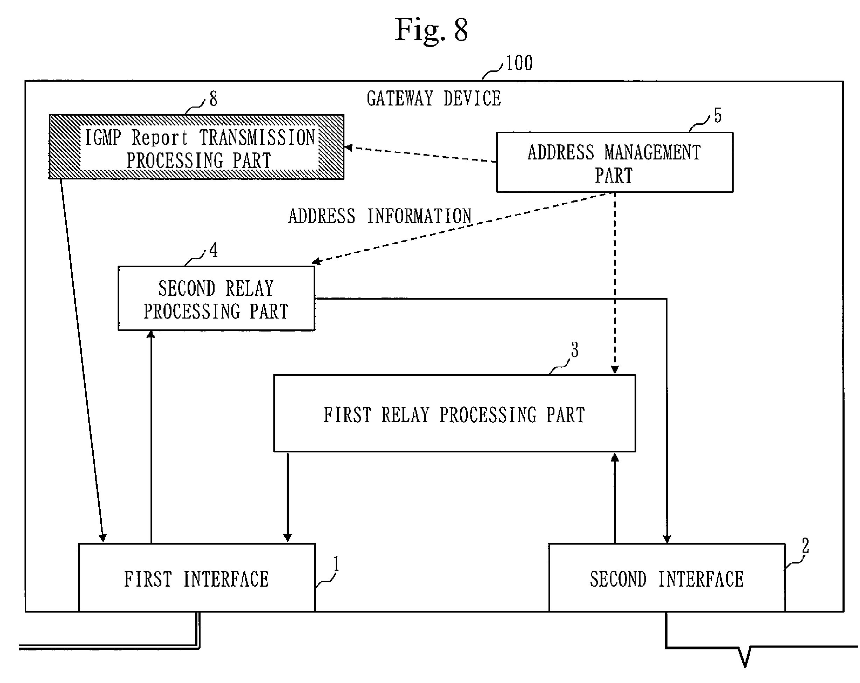

Fig. 8 is a configuration diagram of a gateway device 100 according to Embodiment 4 which is realized based on Embodiment 1. The gateway device 100 can also be configured based on Embodiment 2 or 3.

The IGMP Report transmission processing part 8 has a function of acquiring address information from an address management part 5, generates an IGMP Report packet that matches the address of the acquired address information, and sends out the generated packet via a first interface 1.

This embodiment is useful when the hub 400 in the configuration of Fig. 2 is a device that is provided with an IGMP Snooping function. The IGMP Snooping function serves in the following manner. When an IGMP Report packet generated by the IGMP Report transmission processing part 8 in advance is received, the port corresponding to the gateway device 100 that has transmitted the packet is managed by the hub 400 side. When the hub 400 receives the packet of multicast data transmitted from another gateway device 100 that has transmitted an IGMP Report packet, the hub 400 responds to the destination address of the packet and transfers the packet to only the port that has received the IGMP Report.

From the foregoing, the network according to this embodiment includes a plurality of gateway devices each connected to a plurality of communication devices via the band-sharing network, and the hub 400 connected to the gateway devices via the non-band-sharing network. Each gateway device includes the IGMP Report transmission processing part 8 that acquires address information from the address management part 5, generates an IGMP Report packet corresponding to the address, and sends out the packet via the first interface 1. The hub 400 has an IGMP Snooping function. The hub 400 transfers multicast data to only a relevant port, so that the band occupancy rate of the non-band-sharing network can be decreased more.

### Embodiment 5.

This embodiment will describe an application example where the configuration described in Embodiments 1 and 4 is applied to an air conditioner network.

Note that Embodiment 5 is provided with all of the configurations and operations described in Embodiments 1 to 4.

Communication instruments 210, 220, 230, and 240 in Fig. 2 are provided to air-conditioning outdoor units. Communication instruments 211, 212, 221, 222, 231, 232, 241, and 242 are provided to the air-conditioning outdoor or indoor units.

Gateway devices 101 to 104 are also provided to the air-conditioning outdoor units.

By providing the gateway devices 100 and the communication instruments 210, 220, 230, and 240 to the air-conditioning outdoor units, a layout that is completely the same as that of the conventional air-conditioning system can be obtained. With this layout, control information necessary in only one refrigerant system need only be transferred to the communication instruments connected to the gateway devices 101 to 104. Only control information covering the plurality of air-conditioning outdoor units that constitute a plurality of refrigerant systems is transferred via the gateway devices 101 to 104. Therefore, a larger traffic suppression effect can be obtained as compared to a case where all the communication instruments are connected to band-sharing networks.

### Reference Signs List

1: first interface
2: second interface
3: first relay processing part
4: second relay processing part
5: address management part
6: address storage processing part
7: gateway address management part
8: IGMP Report transmission processing part
100 to 104: gateway device
210 to 212: communication device
220 to 222: communication device
230 to 232: communication device
240 to 242: communication device
300: first address architecture
301: second address architecture
400: network hub

## Claims

1. A gateway device comprising:
a first interface, connected to a non-band-sharing network, for transmitting and receiving data;
a second interface, connected to a band-sharing network, for transmitting and receiving data;
address management means that manages multicast address information for enabling transmission of multicast data via the second interface of the gateway device and of another gateway device;
a first relay processing part that, if the data received by the second interface is the multicast data, adds the multicast address information and a header conforming to a protocol of the non-band-sharing network, to the multicast data received, and outputs the multicast data to the first interface; and
a second relay processing part that, if the data received by the first interface includes the multicast address information, extracts only the multicast data from data conforming to the protocol of the non-band-sharing network, and transmits the multicast data to the second interface.

2. The gateway device according to claim 1, further comprising
an address storage processing part that stores a data sender address received by the second interface,
wherein the first relay processing part, if a destination address of the data received is a sender address stored in the address storage processing part, does not output the data received, to the first interface.

3. The gateway device according to claim 1 or 2, further comprising
a gateway address management part that stores address information of a gateway device as a sender and address information of a corresponding communication device of the sender, out of the data received by the first interface,
wherein the first relay part, if an address of a gateway device corresponding to a destination address of unicast data received by the second interface has been stored in the gateway address management part, treats a gateway address as a destination address of the header of the protocol of the non-band-sharing network.

4. A network comprising a plurality of gateway devices according to any one of claims 1 to 3, and a hub connected to the gateway devices via the non-band-sharing network, each of the gateway devices being connected to a plurality of communication devices via the band-sharing network,
wherein each of the gateway devices includes an IGMP Report transmission processing part that generates an IGMP Report packet corresponding to the address information held by the address management part and sends out the packet via the first interface, and
wherein the hub has an IGMP Snooping function.

5. An air-conditioning outdoor unit comprising the gateway device according to any one of claims 1 to 3, and the communication device.

6. An air-conditioning network comprising air-conditioning outdoor units according to claim 5, and the the hub connected to the air-conditioning outdoor units via a non-band-sharing network, each of the air-conditioning outdoor units being connected to a plurality of communication devices via the band-sharing network,
wherein a gateway device provided to each of the air-conditioning outdoor units includes an IGMP Report transmission processing part that generates an IGMP Report packet corresponding to the address information held by the address management part and sends out the IGMP Report packet via the first interface, and wherein the hub has an IGMP Snooping function.
